# EUROPEAN PATENT APPLICATION

(11) **EP 3 772 125 A1**
(43) Date of publication of application: **03.02.2021**
(21) Application number: 19382651.8
(22) Date of filing: 29.07.2019
(51) Int. Cl.: H01M 4/131, H01M 4/38, H01M 4/525, H01M 4/62, H01M 4/66, H01M 10/054, H01M 10/0562

(54) **SOLID-STATE SODIUM BATTERY**

(71) Applicant: FUNDACIÓN CENTRO DE INVESTIGACIÓN COOPERATIVA DE ENERGÍAS ALTERNATIVAS CIC ENERGIGUNE FUNDAZIOA, 01510 Miñano, Álava (ES); Ormazabal Electric S.L.U., 48170 Zamudio, Bizkaia (ES)
(72) Inventor: OTAEGUI AMEZTEGUI, Laida, E-01510 Miñano, Álava (ES); VILLAVERDE OREJÓN, Aitor, E-01510 Miñano, Álava (ES); QUINTELA ZUMETA, Amaia, E-01510 Miñano, Álava (ES); MORANT MIÑANA, Maria Carmen, E-01510 Miñano, Álava (ES); BUANNIC, Lucienne, Arlington, MA, MA Massachusetts 02476 (US); GILBERT, Ian Paul, E-48340 Amorebieta, Bizkaia (ES)
(74) Representative: ABG Intellectual Property Law, S.L.

(57) **Abstract**

The invention refers to a solid-state sodium battery comprising a positive electrode compartment comprising a positive electrode, said positive electrode comprising a compound of formula NaFeₓMn_{y}Ni_{z}O₂, wherein x is more than 0 and equal or less than 1, y is more than 0 and equal or less than 1, and z is more than 0 and less or equal than 1, and wherein said compound is a neutral oxide; and a catholyte, said catholyte comprising a salt of formula NaX, wherein Na is a sodium cation and X is an anion selected from the group consisting of trifluoromethanesulfonyl imide; fluorosulfonyl trifluoromethanesulfonyl imide; and a polymer; a negative electrode compartment comprising a negative electrode, said negative electrode comprising solid metallic sodium or an alloy comprising solid metallic sodium; and an electrolyte composition; wherein the mass loading of the compound of formula NaFeₓMn_{y}Ni_{z}O₂ is equal or higher than 1.0 mAh·cm⁻². Moreover, the invention refers a module system which comprises at least two stacked batteries as defined above and to the use of said solid-state sodium battery as an energy storage device.

## Description

### FIELD OF THE INVENTION

This invention relates to the field of all-solid state batteries. More particularly, the invention relates to high energy density sodium solid-state batteries with high active material loading electrodes.

### BACKGROUND

In recent years, numerous efforts to develop all-solid state batteries (SSBs), which utilize solid electrolytes in place of liquid electrolytes, have been made. SSBs provide potential solutions to the primary problems encountered in traditional batteries, which employ flammable liquid electrolytes, such as poor safety or energy density. SSBs are therefore expected to outperform current technologies, especially in the context of large-scale energy storage such as in electrical vehicle applications or in grid energy storage.

Since Armand et al. proposed the use of solid polymer electrolytes (SPEs) for Li batteries [M. Armand et al., "Fast ion transport in solids", North-Holland, NewYork, 1979, pp. 131-136], SPEs for solvent-free lithium-ion batteries (LIBs) have gained increasing attention for their clear and potential advantages, such as safety, excellent flexibility, and ease of packaging [Y.-S. Hu, Nat. Energy 2016, 1, 16042].

Compared with LIBs, research of SPEs in sodium-ion batteries (SIBs) is at an early stage and experimental SPE/SIB batteries usually consist of Na salts and a polymer matrix (mostly poly(ethyleneoxide), PEO) [A. Boschin, P. Johansson, Electrochim. Acta 2015, 175, 124]. The ionic conductivities of Na salts/PEO-based SPEs are comparable with the analogous Li salts in LIBs. The sodiumbis(trifluorosulfonyl)-imide (NaTFSI)/PEO electrolyte system has been investigated thoroughly by M. Armand and co-workers [J. Serra Moreno et al., J. Power Sources 2014, 248, 695]. Gerbaldi and co-workers reported a sodium carboxy-methyl cellulose blended NaClO₄/PEO composite with improved mechanical properties without hampering the ionic conductivity and thermal stability [F. Colo et al., Electrochim. Acta 2015, 174, 185].

Solid ceramic electrolytes have also been proposed due to their being more stable over a wider voltage and temperature range, as well as in highly oxidizing and reducing environments. Moreover, they constitute a physical dense barrier against positive and negative electrode contact due to Na dendrite formation or accidental temperature increase and Na melting. In particular, sodium-beta alumina batteries (NBBs), based on a molten Na anode and beta-alumina solid electrolyte, have gained increasing interests. There are mainly two types of NBBs that have been widely studied, based on the particular cathode material: ZEBRA battery and sodium-sulfur battery. However, one of the major failures of these systems are due to the breaking of alumina ceramics as a result of the operating temperatures. In this sense, the authors of the present invention previously developed a low-temperature sodium ceramic electrolyte battery comprising an alkali metal salt-based catholyte [EP 3010079 A1].

Despite all of the above, SSBs still face many challenges before the technology is ready to be commercialized. In particular, high active mass loading needs to be considered for SSBs so as to achieve favorable energy densities.

Most SSBs in the literature [Y. Kato et al., Nature Energy, 2016, 1, (4), 16030; J. Auvergniot et al., Chem. Mater., 2017, 29, (9), 3883; R. Koerver et al., Chem. Mater., 2017, 29, (13), 557413; W. Zhang et al., ACS Appl. Mater. Interfaces, 2017, 9, (21), 17835] exhibit too low active material mass loading (areal capacity), less than 1.0 mAh·cm⁻² (areal capacity being the amount of active materials per electrode cross-sectional area along the electrode thickness direction) and operate at a C-rate around 0.1 C, particularly for charging. Commercial Li-ion battery electrodes for cell assembly with liquid electrolytes can attain capacities over 2.0 mAh cm⁻² and C-rates of 0.2 C. This implies that the performance of SSBs is limited conceivably by kinetics or mass transfer.

The low mass loading is primarily due to the inability to obtain thicker electrodes (thicker than 100-200 µm) using the conventional slurry coating procedure. This is not a trivial task as one might think, and in reality the electrode thickness is not a design parameter that can be arbitrarily and freely varied for the purpose of optimizing the cell performance. Moreover, the formation of soft dendrites during the charging process, due to the high currents required for high loading cathode containing cells, also hindered the use of this kind of cathode. The low areal densities and low volume densities (related to thin electrodes and poor packing density) result in relatively low capacities and low energy densities of SSBs.

With the growing demand for high energy density storage systems, there is keen interest to increase the utilization of the volume of the devices. Novel electrode materials and designs that enable high mass loadings are essential to achieving improved charge and discharge profiles and energy densities.

Therefore, there is a clear and urgent need for developing high energy density sodium solid-state batteries with high active material loading electrodes.

### BRIEF DECRIPTION OF THE INVENTION

The authors of the present invention have developed a solid-state sodium battery showing improved electrochemical performance at high active material mass loadings. Particularly, and according to the results provided in the experimental part, the authors of the present invention have observed that when using in the positive compartment a compound of formula NaFeₓMn_{y}Ni_{z}O₂, wherein x is more than 0 and equal or less than 1, y is more than 0 and equal or less than 1, and z is more than 0 and less or equal than 1, and wherein said compound is a neutral oxide with high active material mass loading in combination with specific sodium salts and a polymer, the battery of the invention exhibits good charge/discharge profile at high areal capacities (higher than 1.0 mAh·cm⁻²) compared to cells described in the literature.

Thus, a first aspect of the present invention refers to a solid-state sodium battery comprising:
a) a positive compartment comprising:
   a.1) a positive electrode, said positive electrode comprising a compound of formula NaFeₓMn_{y}Ni_{z}O₂, wherein x is more than 0 and equal or less than 1, y is more than 0 and equal or less than 1, and z is more than 0 and less or equal than 1, and wherein said compound is a neutral oxide; and
   a.2) a catholyte comprising:
      - a salt of formula NaX, wherein Na is a sodium cation and X is an anion selected from the group consisting of trifluoromethanesulfonyl imide; fluorosulfonyl trifluoromethanesulfonyl imide; and
      - a polymer;
b) a negative compartment comprising a negative electrode, said negative electrode comprising solid metallic sodium or an alloy comprising solid metallic sodium; and
c) an electrolyte composition;
wherein the mass loading of the compound of formula NaFeₓMn_{y}Ni_{z}O₂, wherein x is more than 0 and equal or less than 1, y is more than 0 and equal or less than 1, and z is more than 0 and less or equal than 1, and wherein said compound is a neutral oxide, is equal or higher than 1.0 mAh·cm⁻².

Another aspect of the present invention refers to a module system which comprises at least two stacked batteries as defined above.

A further aspect of the present invention relates to the use of the solid-state sodium battery as defined above as energy storage device.

### BRIEF DESCRIPTION OF THE FIGURES

Figure 1. SEM micrographs of cathodes containing different sodium salts. a) NaFSI; b) NaTFSI; c) NaFTFSI; d) NaClO₄; and e) NaPF₆.
Figure 2. Plots of voltage as a function of time for different sodium salt containing cells. a) NaClO₄; b) NaPF₆; c) NaFSI; d) NaTFSI; and e) NaFTFSI.
Figure 3. Rate capability plots for NaTFSI and NaFTFSI containing cells. (a) Charge and discharge capacity; and b) Coulombic efficiency.

### DETAILED DESCRIPTION OF THE INVENTION

In a first aspect, the present invention provides a solid-state sodium battery which exhibits expected charge/discharge profile at high active material mass loading (higher than 1.0 mAh·cm⁻²).

In particular, the solid-state sodium battery of the present invention comprises a positive compartment, a negative compartment and an electrolyte composition.

The positive electrode compartment comprising a positive electrode and a catholyte. Said positive electrode comprising a compound of formula NaFeₓMn_{y}Ni_{z}O₂, wherein x is more than 0 and equal or less than 1, y is more than 0 and equal or less than 1, and z is more than 0 and less or equal than 1, and wherein said compound is a neutral oxide. Said catholyte comprising a salt of formula NaX, wherein Na is a sodium cation and X is an anion selected from the group consisting of trifluoromethanesulfonyl imide; fluorosulfonyl trifluoromethanesulfonyl imide; and a polymer.

The negative electrode compartment comprising a negative electrode; said negative electrode comprising solid metallic sodium or an alloy comprising solid metallic sodium; and an electrolyte composition; wherein the mass loading of the compound of formula NaFeₓMn_{y}Ni_{z}O₂, wherein x is more than 0 and equal or less than 1, y is more than 0 and equal or less than 1, and z is more than 0 and less or equal than 1, and wherein said compound is a neutral oxide, is equal or higher than 1.0 mAh·cm⁻².

The electrolyte composition of the battery of the present invention preferably comprises a solid sodium-ion conductive composition that conducts sodium ions during use between the negative and the positive electrodes.

The battery of the present invention can be used as a primary battery but also as secondary battery capable of being charged or discharged through electrode chemical reactions generated during the electrochemical operation of the battery. The battery transports sodium ions which diffuse through the solid electrolyte located between both electrode compartments.

More specifically, during charge, sodium ions diffuse from Na-insertion cathode (positive electrode compartment comprising a compound of formula NaFeₓMn_{y}Ni_{z}O₂, wherein x is more than 0 and equal or less than 1, y is more than 0 and equal or less than 1, and z is more than 0 and less or equal than 1, and wherein said compound is a neutral oxide, as active material) to the anode (negative electrode compartment) through the electrolyte where they take an electron from the external circuit and are reduced to sodium metal.

On discharge, sodium is oxidized to sodium ions at the negative electrode, giving up an electron to the external circuit to generate power. The sodium ions diffuse to the positive electrode side, spontaneously driven by the electron-chemical reaction.

### Positive compartment

The positive electrode compartment hosts the positive electrode which constitutes the cathode of the battery of the invention. This positive electrode comprises a compound of formula NaFeₓMn_{y}Ni_{z}O₂, wherein x is more than 0 and equal or less than 1, y is more than 0 and equal or less than 1, and z is more than 0 and less or equal than 1 and wherein said compound is a neutral oxide, which is a sodium-insertion compound. Said compound can be synthesized by any method known by a skilled person as those mentioned in the following publications: Yuan, D. et al., J. Mater. Chem. A, 2013, 1, 3895-3899; Yuan, D.D. et al., ACS Appl. Mater. Interfaces, 2015, 7 (16), 8585-8591; Kim, D. et al., Electrochemistry Communications, 2012, 18, 66-69.

Compounds of formula NaFeₓMn_{y}Ni_{z}O₂, wherein x is more than 0 and equal or less than 1, y is more than 0 and equal or less than 1, and z is more than 0 and less or equal than 1 and wherein said compound is a neutral oxide, are transition metal oxides presenting a single phase 03 crystal structure, also known as pristine O3-layered crystal structure.

In the context of the present invention, the term "active material mass loading" or "areal capacity" is the amount of active materials per electrode cross-sectional area along the electrode thickness direction expressed in units of mAh·cm⁻². In the battery of the present invention, the mass loading of the compounds of formula NaFeₓMn_{y}Ni_{z}O₂, wherein x is more than 0 and equal or less than 1, y is more than 0 and equal or less than 1, and z is more than 0 and less or equal than 1 and wherein said compounds are neutral oxides, is equal or higher than 1.0 mAh·cm⁻².

In a particular embodiment, the volume percentage of the compound formula NaFeₓMn_{y}Ni_{z}O₂, wherein x is more than 0 and equal or less than 1, y is more than 0 and equal or less than 1, and z is more than 0 and less or equal than 1 and wherein said compounds are neutral oxides, respect to the total volume of positive electrode is between 30% and 75%, preferably 40%.

Preferred compounds within the compounds of formula NaFeₓMn_{y}Ni_{z}O₂, wherein x is more than 0 and equal or less than 1, y is more than 0 and equal or less than 1, and z is more than 0 and less or equal than 1 and wherein said compounds are neutral oxides, are compounds of formula NaFeₓMn_{y}Ni_{z}O₂, wherein x = 0.3 to 0.5, y = 0.2 to 0.4, and z = 0.2 to 0.4, and wherein said compounds are neutral oxides. A more preferred compound within the compounds above is compound NaFe_{0.4}Mn_{0.3}Ni_{0.3}O₂.

As defined above, the positive electrode compartment of the battery of the present invention further comprises an electrolyte composition, also known as catholyte, in contact with the positive electrode. Said catholyte comprises:
- a salt of formula NaX, wherein Na is a sodium cation and X is an anion selected from the group consisting of trifluoromethanesulfonyl imide (hereinafter referred to as "TFSI anion"); fluorosulfonyl trifluoromethanesulfonyl imide (hereinafter referred to as "FTFSI anion"); and
- a polymer.

In a preferred embodiment, the salt of formula NaX is NaFTFSI.

In the present invention, suitable polymers for the catholyte composition are polypropylene oxide (PPO), poly[bis(methoxy-ethoxy-ethoxy)phosphazene] (MEEP), polysiloxane (PSi).

In a preferred embodiment, the polymer is polyethylene oxide (PEO).

The polymer used in the catholyte composition can also act as binder. Nevertheless, an additional binder compound could be added to securely adhere the compound of formula NaFeₓMn_{y}Ni_{z}O₂, wherein x is more than 0 and equal or less than 1, y is more than 0 and equal or less than 1, and z is more than 0 and less or equal than 1, and wherein said compound is a neutral oxide, and the catholyte to each other. Polytetrafluoroethylene (PTFE), polyvinylidene fluoride (PVDF), polyethylene-propylene-diene where the diene content is 10% or lower known as EPDM are preferred additional binder compounds.

In a particular embodiment, the volume percentage of catholyte respect to the total volume of positive electrode is between 25% and 70%, preferably 50%.

In another particular embodiment, the molar ratio of the catholyte between the monomer in the polymer and sodium in the salt of formula NaX is between 6:1 and 20:1, preferably 20:1.

A typical positive electrode compartment in a solid-state battery preferably also comprises a current collector which can be made of an aluminum or copper foil covered by a film containing the cathode active material. In the present case said material comprises a compound of formula NaFeₓMn_{y}Ni_{z}O₂, wherein x is more than 0 and equal or less than 1, y is more than 0 and equal or less than 1, and z is more than 0 and less or equal than 1, and wherein said compound is a neutral oxide, preferably a compound of formula NaFeₓMn_{y}Ni_{z}O₂, wherein x = 0.3 to 0.5, y = 0.2 to 0.4, and z = 0.2 to 0.4, and wherein said compound is a neutral oxide, or preferably compound NaFe_{0.4}Mn_{0.3}Ni_{0.3}O₂.

In a particular embodiment, said film also comprises a conductive additive. Examples of conductive additives include carbon black, for example C65, or acetylene black.

In a particular embodiment, the volume percentage of conductive additive respect to the total volume of positive electrode is between 5% and 20%, preferably 10%.

The positive electrode or cathode can be prepared by solvent-casting a slurry comprising a compound of formula NaFeₓMn_{y}Ni_{z}O₂, wherein x is more than 0 and equal or less than 1, y is more than 0 and equal or less than 1, and z is more than 0 and less or equal than 1, and wherein said compound is a neutral oxide, preferably a compound of formula NaFeₓMn_{y}Ni_{z}O₂, wherein x = 0.3 to 0.5, y = 0.2 to 0.4, and z = 0.2 to 0.4, and wherein said compound is a neutral oxide, or the most preferred compound NaFe_{0.4}Mn_{0.3}Ni_{0.3}O₂, the catholyte composition, the conductive additive and a solvent. Examples of suitable solvents include an organic solvent, such as acetonitrile. The slurry is then cast onto the aluminum or copper foil and a free-standing cathode film is formed as the solvent evaporates. The cathode is then dried further at about 50 °C. Alternatively, the slurry containing the compound of formula NaFeₓMn_{y}Ni_{z}O₂, wherein x is more than 0 and equal or less than 1, y is more than 0 and equal or less than 1, and z is more than 0 and less or equal than 1, and wherein said compound is a neutral oxide, preferably the compound of formula NaFeₓMn_{y}Ni_{z}O₂, wherein x = 0.3 to 0.5, y = 0.2 to 0.4, and z = 0.2 to 0.4, and wherein said compound is a neutral oxide, or the most preferred compound NaFe_{0.4}Mn_{0.3}Ni_{0.3}O₂, the catholyte composition, the conductive additive and the solvent can be cast onto a glass substrate and, subsequently the current collector can be applied.

### Negative compartment

The negative electrode constitutes the anode of the battery of the present invention and comprises, as the main component, solid metallic sodium or an alloy comprising solid metallic sodium which is in the form of a foil.

As will be appreciated by the context of the present disclosure, the negative electrode is located within the negative electrode compartment in fluid communication with the solid electrolyte. As the battery of the invention, allows working below the melting point of the metallic sodium, it remains in solid state at operating conditions. Thus, the use of solid metallic sodium is advantageous with respect to molten sodium as it considerably improves the battery safety. Indeed, molten sodium behaves as a liquid and leakage and short circuit may happen due to the high reactivity of this alkali metal.

In a preferred embodiment, the negative electrode does not comprise a current collector.

### Electrolyte

The electrolyte composition of the battery of the present invention preferably comprises a solid sodium-ion conductive composition that conducts sodium ions during use between the negative and the positive electrodes. This electrolyte has a cathode side defining the positive electrode compartment and an anode side defining the negative electrode compartment. Therefore, the solid electrolyte acts as separator of the positive and the negative electrode compartments.

In a preferred embodiment, the electrolyte composition of the battery of the present invention is the same as the catholyte composition, that is, a salt of formula NaX, wherein Na is a sodium cation and X is an anion selected from the group consisting of trifluoromethanesulfonyl imide; fluorosulfonyl trifluoromethanesulfonyl imide; and a polymer.

Suitable salts of formula NaX for the electrolyte composition of the battery are those defined above for the catholyte, preferably NaFTFSI.

Suitable polymers for the electrolyte are of the battery are those defined above for the catholyte, preferably polyethylene oxide (PEO).

The electrolyte can comprise further suitable materials including β-alumina, β'-alumina, β''-alumina. Preferably, β''-alumina.

### Battery

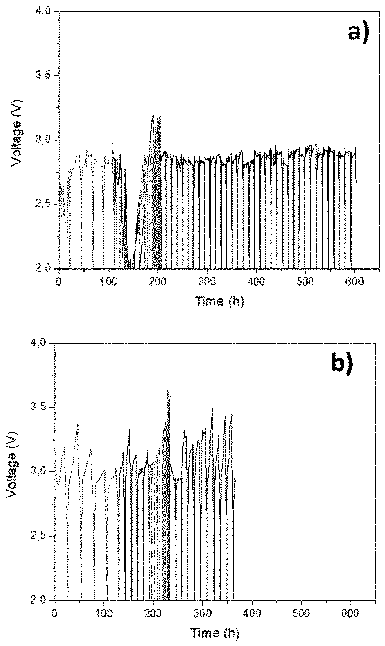

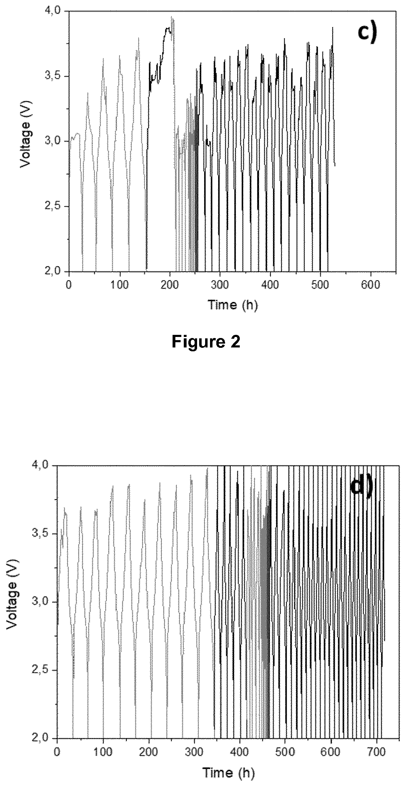

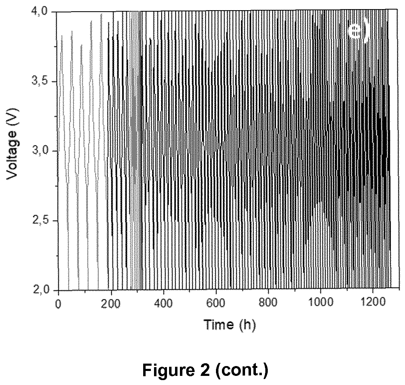

The solid-state sodium battery of the present invention exhibits expected charge/discharge profile for compounds of formula NaFeₓMn_{y}Ni_{z}O₂, wherein x is more than 0 and equal or less than 1, y is more than 0 and equal or less than 1, and z is more than 0 and less or equal than 1, and wherein said compound is a neutral oxide, preferably for compounds of formula NaFeₓMn_{y}Ni_{z}O₂, wherein x = 0.3 to 0.5, y = 0.2 to 0.4, and z = 0.2 to 0.4, and wherein said compound is a neutral oxide, or for the most preferred compound NaFe_{0.4}Mn_{0.3}Ni_{0.3}O₂, at high active material mass loading (higher than 1.0 mAh·cm⁻²). As it is shown in the experimental part and contrary of what it would be expected, not all the alkali metal salts usually employed in liquid electrolyte batteries present expected charge/discharge profiles at high active material mass loading (Figure 2).

As it has been mentioned above, it is extensively reported that most of SSBs exhibit too low active material mass loading (areal capacity), less than 1.0 mAh·cm⁻² (areal capacity being the amount of active materials per electrode cross-sectional area along the electrode thickness direction) and operate at a C-rate around 0.1 C, particularly for charging. Commercial Li-ion battery electrodes for cell assembly with liquid electrolytes can attain capacities over 2.0 mAh cm⁻² and C-rates of 0.2 C. This implies that the performance of SSBs is limited conceivably by kinetics or mass transfer.

In a particular embodiment, the solid-state sodium battery of the present invention presents a capacity equal than 130 mAh/g at a C-rate of C/10.

Without being bound to any theory in particular, the authors of the present invention believe that the improved cyclability of the cell of the present invention for high active material mass loadings (equal or higher than 1.0 mAh·cm⁻²) is due to an improved SEI layer that prevents soft-dendrite formation in the anode and subsequent internal shorts that hinder the expected cell performance.

In a particular embodiment, the negative electrode compartment, the electrolyte composition and the positive electrode compartment are incorporated in a battery case. This battery case includes electrode terminals which are extended from the inside to the outside of the battery case.

In a particular embodiment, the solid-state sodium battery of the present invention is a high energy density battery having an energy density of up to 300 Wh·L⁻¹.

The combination of safety and higher energy density in the solid-state sodium battery of the present invention translates into lower costs by eliminating many of the over-engineered safety features that are necessary with liquid systems today and size reduction and easier integration since it is capable of delivering the required energy and power for a smaller system.

As will be appreciated by those skilled in the art, the solid-state sodium battery of the present invention may be implemented in a variety of configurations and designs. For example, it can take a planar configuration or a tubular configuration in which the different components are contained inside a tubular assembly or housing to form the battery.

Multiple batteries can be stacked to form a stack or module system. Therefore, another aspect of the present invention refers to a module system which comprises at least two stacked batteries as defined above. This system comprises battery repeating units stacked into a module with a variable power output depending upon the final application.

In addition, the high energy density of the solid-state sodium battery of the invention makes it very suitable for use as an energy storage device. This is due to the fact that energy storage devices are desired to be portable and compact by having a minimum weight and volume. To this end, capacity for power and energy density of batteries have to be maximized. The amount of energy stored and the peak power capability are principle parameters of energy storage devices.

Thus, the solid-state sodium battery of the invention can be used as an energy storage device, being rechargeable over a plurality of charge-discharge cycles.

### EXAMPLES

### Materials

PEO (Mw= 10⁶ g mol⁻¹) was dried at 50 °C overnight under dynamic vacuum prior to use. NaTFSI, NaFTFSI, NaClO₄ and NaPF₆ were dried at 100 °C overnight under dynamic vacuum, and NaFSI was dried at 50 °C. Anhydrous acetonitrile (ACN, 99.8%) was used as a solvent. NaFe_{0.4}Mn_{0.3}Ni_{0.3}O₂, dried at 120 °C overnight under dynamic vacuum, was used as active material (AM). Carbon black (CB, C65), dried at 120 °C overnight under dynamic vacuum, was used as a conductive additive. Metallic sodium was used as anode.

### Fabrication of the electrolyte

For the electrolyte preparation the PEO and NaX (X = FSI, TFSI, FTFSI, ClO₄ and PF₆) were mixed according to a EO:Na molar ratio of 20:1. The mixtures of the polymer and the salts were done in anhydrous acetonitrile using a magnetic stirrer for 24 h. The weight ratio of ACN to PEO was fixed to 50:1 to get a well dissolved and well dispersed slurry. After that, the slurries were cast inside a Teflon die and left until the total evaporation of the ACN (12 h, under Dry Room conditions). Once the membranes were dried they were hot pressed (80 °C) in order to get, non-porous and ∼ 60 µm thick membranes. Before using them, the membranes were dried at 50 °C overnight under dynamic vacuum.

### Fabrication of the positive electrode

The cathode is composed of a catholyte, composed by PEO and the same salt as that in the electrolyte, a conductive additive (CB) and an active material. All the cathodes were formulated with a 50% vol of catholyte, 40% of active material and 10% of conductive additive. First of all, the catholyte was mixed according to a EO:Na molar ratio of 20:1 in acetonitrile stirring it overnight. Acetonitrile was added according to a weight ratio of ACN:SC (SC = PEO + NaX + AM + CB) of 4:1. The active material and carbon black were premixed in an agate mortar. Powder mixture and catholyte solution were mixed in a planetary ball milling (Micro Pulverisette 7 premium, Fritsch), with 5 mm ZrO₂ balls, using a Balls:SC ratio of 30:1. The obtained slurry was cast onto aluminum foil. All laminates were cast with a known gap, in order to get an active material loading corresponding to 1 mAh·cm⁻². The laminates were then dried at 50 °C overnight under dynamic vacuum.

### Morphological characterization

The morphological characterization was conducted via scanning electron microscopy (SEM) with a FEI Quanta 200F FEG-SEM using an acceleration voltage in the range between 20 and 30 keV using either secondary electron (SE) or backscattered electron (BSE) detectors.

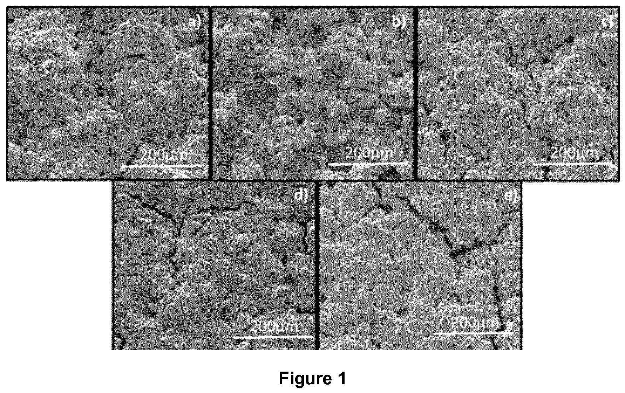

The microstructure of the NaFe_{0.4}Mn_{0.3}Ni_{0.3}O₂ electrodes with different catholyte compositions was characterized by SEM. No clear differences were detected depending on the catholyte composition (see Figure 1).

### Fabrication of the battery

To evaluate the electrochemical performance of the different cell compositions, CR2032 coin cells were assembled in argon glove box with a cathode disk, a membrane and Na disk. The Na ingot was rolled in order to get homogeneous thickness. Before cycling, the cells were conditioned at 70 °C for 24 h to ensure good interfacial contact.

### Cycling tests

The cycling performance of the cells with different catholyte and electrolyte compositions (Figure 2) shows that not all the NaX salts that work as a liquid electrolyte can be used in an all solid state cell to build cells that cycle stably in the voltage range of interest, when the active material loading is as high as 1 mAh·cm⁻². Voltage profiles in Figure 2.a-c (corresponding to NaClO₄, NaPF₆ and NaFSI as catholyte and electrolyte respectively) show that voltage does not reach the upper cut-off voltage (4 V for NaFe_{0.4}Mn_{0.3}Ni_{0.3}O₂. During the charging process "soft dendrites" are generated and these dendrites create small and localized short circuits, impeding the voltage to reach the upper cut-off limit.

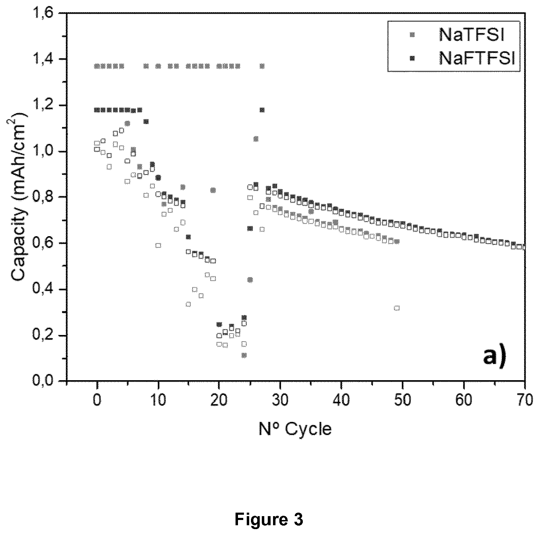

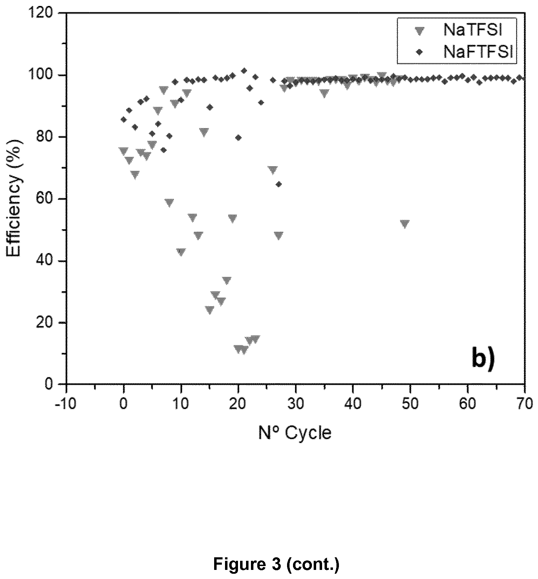

Opposite to this, when NaTFSI and NaFTFSI are used as catholyte/electrolyte (Figure 2.d and 2.e), the voltage profile expected for NaFe_{0.4}Mn_{0.3}Ni_{0.3}O₂ can be observed. Therefore, those two salts enable expected cell performance in solid-state cell configuration. Moreover, better cycling performance is observed for the cells with NaFTFSI as catholyte/electrolyte (Figure 3).

## Claims

1. A solid-state sodium battery comprising:
a) a positive compartment comprising:
a.1) a positive electrode, said positive electrode comprising a compound of formula NaFeₓMn_{y}Ni_{z}O₂, wherein x is more than 0 and equal or less than 1, y is more than 0 and equal or less than 1, and z is more than 0 and less or equal than 1, and wherein said compound is a neutral oxide; and
a.2) a catholyte comprising:
- a salt of formula NaX, wherein Na is a sodium cation and X is an anion selected from the group consisting of trifluoromethanesulfonyl imide; fluorosulfonyl trifluoromethanesulfonyl imide; and
- a polymer;
b) a negative compartment comprising a negative electrode, said negative electrode comprising solid metallic sodium or an alloy comprising solid metallic sodium; and
c) an electrolyte composition;
wherein the mass loading of the compound of formula NaFeₓMn_{y}Ni_{z}O₂, wherein x is more than 0 and equal or less than 1, y is more than 0 and equal or less than 1, and z is more than 0 and less or equal than 1, and wherein said compound is a neutral oxide, is equal or higher than 1.0 mAh·cm⁻².

2. The solid-state sodium battery according to claim 1, wherein in the compound of formula NaFeₓMn_{y}Ni_{z}O₂, wherein x = 0.3 to 0.5, y = 0.2 to 0.4, and z = 0.2 to 0.4, and wherein said compound is a neutral oxide.

3. The solid-state sodium battery according to any of claims 1 or 2, wherein the compound of formula NaFeₓMn_{y}Ni_{z}O₂ is NaFe_{0.4}Mn_{0.3}Ni_{0.3}O₂.

4. The solid-state sodium battery according to any of claims 1 to 3, wherein the salt of formula NaX is sodium(fluorosulfonyl)(trifluoromethanesulfonyl) imide.

5. The solid-state sodium battery according to any one of claims 1 to 4, wherein the polymer is polyethylene oxide.

6. The solid-state sodium battery according to any one of claims 1 to 5, wherein the positive electrode compartment further comprises a current collector made of an aluminum or copper foil.

7. The solid-state sodium battery according to any of claims 1 to 6, wherein the positive electrode further comprises a conductive additive.

8. The solid-state sodium battery according to any of claims 1 to 7, wherein the volume percentage of the compound of formula NaFeₓMn_{y}Ni_{z}O₂ respect to the total positive electrode volume is between 30% and 75%.

9. The solid-state sodium battery according to any of claims 1 to 8, wherein the electrolyte composition comprises a polymer.

10. The solid-state sodium battery according to any of claims 1 to 9, wherein the electrolyte composition comprises:
- a salt of formula NaX, wherein Na is a sodium cation and X is an anion selected from the group consisting of (trifluoromethanesulfonyl)imide; (fluorosulfonyl) (trifluoromethanesulfonyl)imide; and
- a polymer.

11. The solid-state sodium battery according to any of claims 1 and 10, wherein the electrolyte composition comprises β"-alumina.

12. The solid-state sodium battery according to any of claims 1 to 11, having a capacity of 130 mAh/g at C-rate of C/10.

13. The solid-state sodium battery according to any of claims 1 to 12, having an energy density up to 300 Wh·L⁻¹.

14. A module system which comprises at least two stacked batteries as defined in any of claims 1 to 13.

15. Use of the solid-state sodium battery as defined in any of claims 1 to 13 as an energy storage device.
